# EUROPÄISCHE PATENTSCHRIFT

(11) **EP 2 608 879 B1**
(45) Veröffentlichungstag und Bekanntmachung des Hinweises auf die Patenterteilung: **15.05.2019**
(21) Anmeldenummer: 11754633.3
(22) Anmeldetag: 22.08.2011
(51) Int. Cl.: B01J 23/14, B01J 23/46, B01J 37/02, B01J 37/08, B01J 35/10, C01B 7/04, B01J 23/62

(54) **KATALYSATOR UND VERFAHREN ZUR HERSTELLUNG VON CHLOR DURCH GASPHASENOXIDATION**
CATALYST AND METHOD FOR THE PRODUCTION OF CHLORINE BY GAS PHASE OXIDATION
CATALYSEUR ET PROCÉDÉ POUR PRODUIRE DU CHLORE PAR UNE OXYDATION CATALYTIQUE EN PHASE GAZEUSE DE CHLORURE D'HYDROGÈNE

(30) Priorität: 25.08.2010 DE 102010039735
(43) Veröffentlichungstag der Anmeldung: 03.07.2013
(73) Patentinhaber: Covestro Deutschland AG, 51373 Leverkusen (DE)
(72) Erfinder: WOLF, Aurel, 42489 Wülfrath (DE); MLECZKO, Leslaw, 41542 Dormagen (DE); SCHLÜTER, Oliver, Felix-Karl, 51381 Leverkusen (DE)
(74) Vertreter: Levpat
(86) Internationale Anmeldenummer: PCT/EP2011/064370
(87) Internationale Veröffentlichungsnummer: WO 2012/025483

(56) Entgegenhaltungen:
- DE-A1-102007 020 096
- DE-A1-102007 020 142
- DE-A1-102007 020 154

## Beschreibung

Die Erfindung geht aus von bekannten Verfahren zur Herstellung von Chlor durch katalytische Gasphasenoxidation von Chlorwasserstoff mit Sauerstoff, worin der Katalysator Zinndioxid als Träger und mindestens eine Halogen und/oder Sauerstoff enthaltende Ruthenium-Verbindung umfasst. Die Erfindung betrifft die Kalzinierung des Zinndioxids vor der Aufbringung des katalytisch aktiven Materials, eine Katalysatorzusammensetzung und deren Verwendung.

Das von Deacon 1868 entwickelte Verfahren der katalytischen Chlorwasserstoffoxidation mit Sauerstoff in einer exothermen Gleichgewichtsreaktion stand am Anfang der technischen Chlorchemie:

4 HCl + O₂ ⇒ 2 Cl₂ + 2 H₂O.

Durch die Chloralkalielektrolyse wurde das Deacon-Verfahren jedoch stark in den Hintergrund gedrängt. Nahezu die gesamte Produktion von Chlor erfolgte durch Elektrolyse wässriger Kochsalzlösungen [Ullmann Encyclopedia of industrial chemistry, seventh release, 2006]. Die Attraktivität des Deacon-Verfahrens nimmt jedoch in jüngster Zeit wieder zu, da der weltweite Chlorbedarf stärker wächst als die Nachfrage nach Natronlauge. Dieser Entwicklung kommt das Verfahren zur Herstellung von Chlor durch Oxidation von Chlorwasserstoff entgegen, das von der Natronlaugenherstellung entkoppelt ist. Darüber hinaus fällt Chlorwasserstoff in großen Mengen beispielsweise bei Phosgenierungsreaktionen, etwa bei der Isocyanat-Herstellung, als Koppelprodukt an.

Die Oxidation von Chlorwasserstoff zu Chlor ist eine Gleichgewichtsreaktion. Die Lage des Gleichgewichts verschiebt sich mit zunehmender Temperatur zu Ungunsten des gewünschten Endproduktes. Es ist daher vorteilhaft, Katalysatoren mit möglichst hoher Aktivität einzusetzen, die die Reaktion bei niedriger Temperatur ablaufen lassen.

Als aktueller Stand der Technik werden für die HCl-Oxidation Ruthenium basierte Katalysatoren eingesetzt. Erste Katalysatoren für die Chlorwasserstoffoxidation mit der katalytisch aktiven Komponente Ruthenium wurden schon 1965 in DE 1 567 788 beschrieben, in diesem Fall ausgehend von RuCl₃ z.B. geträgert auf Siliziumdioxid und Aluminiumoxid. Weitere Ru-basierte Katalysatoren mit der Aktivmasse Rutheniumoxid oder Rutheniummischoxid und als Trägermaterial verschiedene Oxide, wie bspw. Titandioxid, Zirkondioxid, usw. wurden in DE-A 197 48 299, DE-A 197 34 412 und EP 0 936 184 A2 beschrieben.

Weiterhin offenbaren die Schriften WO 2007/134772 A1 und WO 2007/134721 A1 Rutheniumbasierte Katalysatorsysteme, die auf Zinndioxid geträgert sind und deren Aktivität sich eindeutig vom vorherigen Stand der Technik abheben.

Ein Nachteil der in WO 2007/134772 A1 und WO 2007/134721 A1 beanspruchten Katalysatorsysteme ist jedoch, dass unter den Reaktionsbedingungen der HCl-Gasphasenoxidation Zinn, vermutlich in Form des flüchtigen Verbindung SnCl₄, aus dem Trägermaterial ausgetragen wird. Dies ist negativ insbesondere für die Lebensdauer der Katalysatoren, da die mechanische Stabilität durch den fortschreitenden Zinnverlust nach und nach reduziert wird. Hinzu kommt, dass das ausgetragene Zinnchlorid vom Produkt abgetrennt werden muss. Demzufolge besteht ein Bedarf nach einem Verfahren, das die chemische Stabilität der aus WO 2007/134772 A1 und WO 2007/134721 A1 bekannten Katalysatoren gegen den Austrag von Zinn erhöht, ohne deren überlegene Aktivität zu beeinträchtigen.

Die Aufgabe der vorliegenden Erfindung besteht also darin, die chemische Stabilität der aus WO 2007/134772 A1 und WO 2007/134721 A1 bekannten Katalysatoren gegen den Austrag von Zinn zu erhöhen, ohne deren überlegene Aktivität zu beeinträchtigen. Gelöst wird die Aufgabe durch eine Kalzinierung der Zinndioxid enthaltenden Trägerkomponente vor der Aufbringung des katalytisch aktiven Materials.

Überraschenderweise wurde nun gefunden, dass durch die gezielte Kalzinierung des Zinndioxids enthaltenden Trägers vor der Aufbringung des katalytisch aktiven Materials sowohl die chemische Stabilität des Katalysators unter den Reaktionsbedingungen der HCl-Gasphasenoxidation als auch die Aktivität erhöht werden kann.

Gegenstand der Erfindung ist eine Katalysatorzusammensetzung, die mindestens Zinndioxid als Trägermaterial und mindestens eine Ruthenium enthaltende Verbindung als katalytisch aktives Material umfasst, dadurch gekennzeichnet, dass das Trägermaterial vor der Aufbringung des katalytisch aktiven Materials einer Kalzinierung in Gegenwart oxidierender Gase, insbesondere in Gegenwart von Luft bei einer Temperatur von mindestens 450°C unterzogen ist.

Erfindungsgemäß wird Zinndioxid als Träger der katalytisch aktiven Komponente eingesetzt, wobei Zinndioxid zu über 90%, bevorzugt vollständig, in der Kassiteritstruktur vorliegt.

Weiterer Gegenstand der Erfindung ist auch ein Verfahren zur Herstellung von Chlor durch katalytische Gasphasenoxidation von Chlorwasserstoff mit Sauerstoff an einem Feststoffkatalysator, bei dem der Katalysator wenigstens Zinndioxid als Trägermaterial und mindestens eine Ruthenium enthaltende Verbindung als katalytisch aktives Material umfasst, dadurch gekennzeichnet, dass der Katalysator die oben genannte erfindungsgemäße Zusammensetzung aufweist und das Trägermaterial vor der Aufbringung des katalytisch aktiven Materials in Gegenwart oxidierender Gase, insbesondere in Gegenwart von Luft, bei einer Temperatur von mindestens 450°C kalziniert wird.

Erfindungsgemäß wird als katalytisch aktive Komponente mindestens eine Ruthenium enthaltende Verbindung verwendet. Dabei handelt es sich insbesondere um ein Rutheniumhalogenid, Rutheniumhydroxid, Rutheniumoxid, Rutheniumoxihalogenid und/oder Ruthenium in metallischer Form.

Bevorzugt ist eine Katalysatorzusammensetzung, in der die Rutheniumverbindung eine Halogen und/oder Sauerstoff enthaltende Rutheniumverbindung ist.

Bevorzugt wird als katalytisch aktive Komponente eine Halogen-enthaltenden Ruthenium-Verbindung verwendet. Dabei handelt es sich z.B. um eine Verbindung, bei der Halogen ionisch bis polarisiert kovalent an ein Rutheniumatom gebunden ist.

Das Halogen in der bevorzugten Halogen-enthaltenden Ruthenium-Verbindung wird bevorzugt aus der Gruppe ausgewählt, die aus Chlor, Brom und Iod besteht. Besonders bevorzugt ist Chlor.

Die Halogen enthaltende Ruthenium-Verbindung schließt solche ein, die ausschließlich aus Halogen und Ruthenium bestehen. Bevorzugt sind jedoch solche, die sowohl Sauerstoff als auch Halogen, insbesondere Chlor bzw. Chlorid enthalten. Besonders bevorzugt ist eine Katalysatorzusammensetzung, in der die katalytisch aktive Rutheniumverbindung ausgewählt ist aus der Reihe: Rutheniumchlorid, Rutheniumoxychlorid und einer Mischung von Rutheniumchlorid und Rutheniumoxid und insbesondere eine Rutheniumoxychlorid-Verbindung umfasst.

Besonders bevorzugt wird als katalytisch aktive Spezies mindestens eine Rutheniumoxychlorid-Verbindung verwendet. Eine Rutheniumoxychlorid-Verbindung im Sinne der Erfindung ist eine Verbindung bei der sowohl Sauerstoff als auch Chlor ionisch bis polarisiert kovalent an Ruthenium gebunden vorliegen. Eine solche Verbindung weist also die allgemeine Zusammensetzung RuOₓCl_{y} auf. Bevorzugt können verschiedene derartige Rutheniumoxychlorid-Verbindungen nebeneinander im Katalysator vorliegen. Beispiele definierter besonders bevorzugter Rutheniumoxychlorid-Verbindungen schließen insbesondere folgende Zusammensetzungen ein: Ru₂Cl₄, RuOCl₂, Ru₂OCl₅ und Ru₂OCl₆.

In einem besonders bevorzugten Verfahren ist die Halogen enthaltende Ruthenium-Verbindung eine Mischverbindung entsprechend der allgemeinen Formel RuClₓO_{y}, worin x eine Zahl von 0,8 bis 1,5 und y eine Zahl von 0,7 bis 1,6 bedeutet.

Die katalytisch aktive Rutheniumoxychlorid-Verbindung im Sinne der Erfindung ist bevorzugt durch ein Verfahren erhältlich, welches zunächst das Aufbringen einer insbesondere wässrigen Lösung oder Suspension von mindestens einer Halogen enthaltenden Rutheniumverbindung auf den kalzinierten, Zinndioxid enthaltenden Träger und das Entfernen des Lösungsmittels umfasst. Andere denkbare Verfahren schließen die Chlorierung von nichtchlorhaltigen Ruthenium-Verbindungen, wie Rutheniumhydroxiden vor oder nach dem Aufziehen der Ruthenium-Verbindung auf den Träger ein.

Ein bevorzugtes Verfahren schließt das Aufbringen einer wässrigen Lösung von RuCl₃ auf den Träger ein.

Bevorzugt beträgt die Temperatur bei der Kalzinierung des Trägermaterials vor der Aufbringung des katalytisch aktiven Materials mindestens 700°C, besonders bevorzugt 700°C bis 1100°C. Die Dauer der Kalzinierung des Trägermaterials vor der Aufbringung des katalytisch aktiven Materials beträgt bevorzugt 0,5h bis 10h, besonders bevorzugt 1h bis 6h. Die oxidierenden Gase bei der Kalzinierung des Trägermaterials vor der Aufbringung des katalytisch aktiven Materials enthalten bevorzugt Sauerstoff im Bereich von 10 Vol.-% bis 50 Vol.-%, besonders bevorzugt 15 bis 25 Vol.-%.

Erfolgt die Kalzinierung des Trägermaterials vor der Aufbringung des katalytisch aktiven Materials bei zu hohen Temperaturen (z. B. > 1500°C) oder zu lange bei geeigneten Temperaturen, so wird zwar auch die chemische Stabilität erhöht, aber durch Versinterung wird fortschreitend auch BET-Oberfläche und damit einhergehend die Aktivität des entstehenden Katalysators unter Umständen vermindert.

Nach dem Aufbringen der Ruthenium-Verbindung erfolgt im Allgemeinen ein Trocknungsschritt, zweckmäßig in Anwesenheit von Sauerstoff bzw. Luft, um zumindest teilweise eine Umwandlung in die bevorzugten Rutheniumoxychlorid-Verbindungen zu ermöglichen. Um eine Umwandlung der bevorzugten Rutheniumoxychlorid-Verbindungen in Rutheniumoxide zu vermeiden, sollte die Trocknung bevorzugt bei weniger als 280°C durchgeführt werden, insbesondere bei wenigstens 80°C, besonders bevorzugt wenigstens 100°C. Die Trocknungsdauer beträgt bevorzugt 10 min bis 6 h. Die Katalysatoren können unter Normaldruck oder vorzugsweise bei vermindertem Druck getrocknet werden.

Ein bevorzugtes Verfahren ist dadurch gekennzeichnet, dass der Katalysator dadurch erhältlich ist, dass ein vor Aufbringung des aktiven Materials kalzinierter, Zinndioxid enthaltender Träger mit einer Halogen enthaltenden Rutheniumverbindung beladenen wird und bei einer Temperatur von mindestens 200°C, bevorzugt mindestens 240°C, besonders bevorzugt mindestens 250°C bis 650°C, insbesondere in einer Sauerstoff enthaltenden Atmosphäre, besonders bevorzugt unter Luft kalziniert wird. Die Kalzinierdauer beträgt bevorzugt 30 min bis 24 h.

In einem besonders bevorzugten Verfahren beträgt der Anteil des Rutheniums aus der katalytisch aktiven Rutheniumverbindung im Verhältnis zur gesamten Katalysatorzusammensetzung, insbesondere nach dem Kalzinieren, 0,5 bis 5 Gew-%, bevorzugt 1,0 bis 4 Gew.-%, besonders bevorzugt 1,5 bis 3 Gew.-%.

Will man als katalytisch aktive Spezies Halogen-Ruthenium-Verbindungen, die keinen Sauerstoff enthalten, aufziehen, so kann man unter Sauerstoffausschluss auch bei höheren Temperaturen trocknen.

Bevorzugt ist der Katalysator erhältlich durch ein Verfahren, welches das Aufbringen einer wässrigen Lösung oder Suspension von mindestens einer Halogen enthaltenden Rutheniumverbindung auf den kalzinierten Zinndioxid enthaltende Trägerkomponente und das anschließende Trocknen bei weniger als 280°C umfasst, und anschließender Aktivierung unter den Bedingungen der Gasphasenoxidation von Chlorwasserstoff, bei der eine weitgehende Umwandlung in die Rutheniumoxychloride stattfindet. Je länger die Trocknung in Gegenwart von Sauerstoff erfolgt, desto mehr Oxychlorid bildet sich.

In einer besonders bevorzugten Variante wird auf den Träger eine Sauerstoff enthaltende Ruthenium-Verbindung aufgebracht. Dabei handelt es sich um eine Verbindung bei der Sauerstoff ionisch bis polarisiert kovalent an ein Rutheniumatom gebunden ist. Diese Verbindung wird durch das Aufbringen einer wässrigen Lösung oder Suspension von mindestens einer Halogenid enthaltenden Rutheniumverbindung auf das kalzinierte Zinndioxid und die anschließende Fällung mittels einer alkalischen Verbindung zu Rutheniumhydroxid und gegebenenfalls die Kalzinierung des gefällten Produktes hergestellt.

Die Fällung kann alkalisch unter direkter Bildung der Sauerstoff enthaltenden Ruthenium-Verbindung durchgeführt werden. Sie kann auch reduzierend unter primärer Bildung von metallischem Ruthenium erfolgen, das anschließend unter Sauerstoffzufuhr kalziniert wird, wobei sich die Sauerstoff enthaltende Ruthenium-Verbindung bildet.

Ein bevorzugtes Verfahren schließt das Aufbringen durch Imprägnierung, Tränkung usw. einer wässrigen Lösung von RuCl₃ auf die kalzinierte Zinndioxid enthaltende Trägerkomponente ein.

Nach dem Aufbringen der Halogenid-enthaltenden Ruthenium-Verbindung erfolgt im Allgemeinen ein Fällungs- und ein Trocknungs- oder Kalzinierschritt, der zweckmäßig in Anwesenheit von Sauerstoff bzw. Luft bei Temperaturen von bis zu 650°C erfolgt.

Besonders bevorzugt kann die katalytische Komponente, d.h. die Ruthenium enthaltende Verbindung beispielsweise durch Feucht- und Nass-Imprägnierung eines Trägers mit geeigneten in Lösung vorhandenen Ausgangsverbindungen oder Ausgangsverbindungen in flüssiger oder kolloidaler Form, Auf- und Co-Auffällverfahren, sowie Ionenaustausch und Gasphasenbeschichtung (CVD, PVD) auf den Träger aufgebracht werden.

Die erfindungsgemäßen Katalysatoren für die Chlorwasserstoffoxidation zeichnen sich durch eine hohe Aktivität und eine hohe Stabilität bei niedrigen Temperaturen aus.

Bevorzugt wird, wie oben bereits beschrieben, die neue Katalysatorzusammensetzung in dem als Deacon-Prozess bekannten katalytischen Verfahren eingesetzt. Hierbei wird Chlorwasserstoff mit Sauerstoff in einer exothermen Gleichgewichtsreaktion zu Chlor oxidiert, wobei Wasserdampf anfällt. Die Reaktionstemperatur beträgt üblicherweise 180 bis 500°C, besonders bevorzugt 200 bis 450°C, insbesondere bevorzugt 250 bis 420°C, der übliche Reaktionsdruck beträgt 1 bis 25 bar, bevorzugt 1,2 bis 20 bar, besonders bevorzugt 1,5 bis 17 bar, ganz besonders bevorzugt 2 bis 15 bar. Da es sich um eine Gleichgewichtsreaktion handelt, ist es zweckmäßig, bei möglichst niedrigen Temperaturen zu arbeiten, bei denen der Katalysator noch eine ausreichende Aktivität aufweist. Ferner ist es zweckmäßig, Sauerstoff in überstöchiometrischen Mengen zum Chlorwasserstoff einzusetzen. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohem Druck und dementsprechend bei gegenüber Normaldruck längerer Verweilzeit zu arbeiten.

Geeignete Katalysatoren können ergänzend zu der Rutheniumverbindung auch Verbindungen anderer Metalle oder Edelmetalle, beispielsweise Gold, Palladium, Platin, Osmium, Iridium, Silber, Kupfer, Chrom oder Rhenium enthalten.

Die katalytische Chlorwasserstoff-Oxidation kann bevorzugt adiabatisch oder isotherm oder annähernd isotherm, diskontinuierlich, bevorzugt aber kontinuierlich als Fließ- oder Festbettverfahren, bevorzugt als Festbettverfahren, besonders bevorzugt adiabat bei einer Reaktortemperatur von 180 bis 500°C, bevorzugt 200 bis 450°C, besonders bevorzugt 250 bis 420°C und einem Druck von 1 bis 25 bar (1000 bis 25000 hPa), bevorzugt 1,2 bis 20 bar, besonders bevorzugt 1,5 bis 17 bar und insbesondere bevorzugt 2,0 bis 15 bar durchgeführt werden.

Übliche Reaktionsapparate, in denen die katalytische Chlorwasserstoff-Oxidation durchgeführt wird, sind Festbett- oder Wirbelbettreaktoren. Die katalytische Chlorwasserstoff- Oxidation kann bevorzugt auch mehrstufig durchgeführt werden.

Bei der adiabatischen, der isothermen oder annähernd isothermen Verfahrensführung, bevorzugt aber bei der adiabatischen Verfahrensführung, können auch mehrere, insbesondere 2 bis 10, bevorzugt 2 bis 6, in Reihe geschaltete Reaktoren mit Zwischenkühlung eingesetzt werden. Der Chlorwasserstoff kann entweder vollständig zusammen mit dem Sauerstoff vor dem ersten Reaktor oder über die verschiedenen Reaktoren verteilt zugegeben werden. Diese Reihenschaltung einzelner Reaktoren kann auch in einem Apparat zusammengeführt werden.

Eine weitere bevorzugte Ausführungsform einer für das Verfahren geeigneten Vorrichtung besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpern sollte das Inertmaterial bevorzugt ähnliche äußere Abmessungen haben.

Als Katalysatorformkörper eignen sich Formkörper mit beliebigen Formen, bevorzugt sind Tabletten, Ringe, Zylinder, Sterne, Wagenräder oder Kugeln, besonders bevorzugt sind Ringe, Zylinder, Kugeln oder Sternstränge als Form. Bevorzugt ist die Kugelform. Die Größe der Katalysatorformkörper, bspw. Durchmesser bei Kugeln oder maximale Querschnittsbreite beträgt im Mittel insbesondere 0,3 bis 7 mm, ganz bevorzugt 0,8 bis 5 mm.

Alternativ zu den zuvor beschriebenen feinteiligen Katalysator(form)körpern kann der Träger auch ein Monolith aus Trägermaterial sein, z.B. nicht nur ein "klassischer" Trägerkörper mit parallelen, radial nicht untereinander verbundenen Kanälen; es zählen auch Schäume, Schwämme o. dgl. mit dreidimensionalen Verbindungen innerhalb des Trägerkörpers zu den Monolithen sowie Trägerkörper mit Kreuzstromkanälen.

Der monolithische Träger kann eine Wabenstruktur, aber auch eine offene oder geschlossene Kreuzkanalstruktur aufweisen. Der monolithische Träger besitzt eine bevorzugte Zelldichte von 100 bis 900 cpsi (cells per square inch), besonders bevorzugt von 200 bis 600 cpsi.

Ein Monolith im Sinne der vorliegenden Erfindung wird z.B. in "Monoliths in multiphase catalytic processes - aspects and prospects" von F. Kapteijn, J. J. Heiszwolf, T. A. Nijhuis und J. A. Moulijn, Cattech 3, 1999, S. 24 offenbart.

Als zusätzliche Trägermaterialen oder Bindemittel für den Träger eignen sich besonders beispielsweise Siliziumdioxid, Graphit, Titandioxid mit Rutil- oder Anatas-Struktur, Zirkondioxid, Aluminiumoxid oder deren Gemische, bevorzugt Titandioxid, Zirkondioxid, Aluminiumoxid oder deren Gemische, besonders bevorzugt γ- oder δ-Aluminiumoxid oder deren Gemische. Bevorzugtes Bindemittel ist Aluminiumoxid oder Zirkonoxid. Der Anteil an Bindemittel beträgt erfindungsgemäß bezogen auf den fertigen Katalysator 1 bis 30 Gew.-%, bevorzugt 2 bis 25 Gew.-% und ganz bevorzugt 5 bis 20 Gew.-%. Das Bindemittel erhöht die mechanische Stabilität (Festigkeit) der Katalysatorformkörper.

In einer besonders bevorzugten Variante der Erfindung ist die katalytisch aktive Komponente im Wesentlichen auf der Oberfläche des eigentlichen Trägermaterials, z.B. des Zinndioxids, nicht jedoch auf der Oberfläche des Bindemittels vorliegend.

Zur zusätzlichen Dotierung der Katalysatoren eignen sich als Promotoren, Alkalimetalle oder Metallverbindungen wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Promotoren können, ohne darauf beschränkt zu sein, durch Imprägnier- und CVD-Verfahren auf den Katalysator aufgebracht werden, bevorzugt ist eine Imprägnierung z. B. von Metallverbindungen, insbesondere Chloriden und/oder Nitraten, insbesondere bevorzugt ist ein gemeinsames Aufbringen mit der katalytischen Hauptkomponente.

Der Umsatz an Chlorwasserstoff bei der HCl-Oxidation im einfachen Durchgang kann bevorzugt auf 15 bis 90%, bevorzugt 40 bis 90%, besonders bevorzugt 70 bis 90% begrenzt werden. Nicht umgesetzter Chlorwasserstoff kann nach Abtrennung teilweise oder vollständig in die katalytische Chlorwasserstoff-Oxidation zurückgeführt werden. Das Volumenverhältnis von Sauerstoff zu Chlorwasserstoff am Reaktoreintritt beträgt bevorzugt 1:2 bis 20:1, bevorzugt 2:1 bis 8:1, besonders bevorzugt 2:1 bis 5:1.

Die Reaktionswärme der katalytischen Chlorwasserstoff-Oxidation kann in vorteilhafter Weise zur Erzeugung von Hochdruck-Wasserdampf genutzt werden. Dieser kann zum Betrieb eines Phosgenierungsreaktors und/oder von Destillationskolonnen, insbesondere von Isocyanat-Destillationskolonnen genutzt werden.

In einem weiteren Schritt wird das gebildete Chlor abgetrennt. Der Abtrennschritt umfasst üblicherweise mehrere Stufen, nämlich die Abtrennung und gegebenenfalls Rückführung von nicht umgesetztem Chlorwasserstoff aus dem Produktgasstrom der katalytischen Chlorwasserstoff-Oxidation, die Trocknung des erhaltenen, im wesentlichen Chlor und Sauerstoff enthaltenden Stroms sowie die Abtrennung von Chlor aus dem getrockneten Strom.

Die Abtrennung von nicht umgesetztem Chlorwasserstoff und von gebildetem Wasserdampf kann durch Auskondensieren von wässriger Salzsäure aus dem Produktgasstrom der Chlorwasserstoffoxidation durch Abkühlung erfolgen. Chlorwasserstoff kann auch in verdünnter Salzsäure oder Wasser absorbiert werden.

Gegenstand der Erfindung ist ferner die Verwendung von kalziniertem Zinndioxid als Katalysatorträger für einen Katalysator in der katalytischen Gasphasenoxidation von Chlorwasserstoff mit Sauerstoff.

Es wird noch die Verwendung der neuen Katalysatorzusammensetzung als Katalysator, insbesondere für Oxidationsreaktionen, besonders bevorzugt als Katalysator in der katalytischen Gasphasenoxidation von Chlorwasserstoff mit Sauerstoff beschriebeb.

Die folgenden Beispiele veranschaulichen die vorliegende Erfindung:

### Beispiele

Die wesentlichen Kennzahlen und Ergebnisse aus den nachfolgenden Beispielen sind in einer Tabelle nach dem letzten Beispiel zusammengefasst.

### Beispiel 1 (erfindungsgemäß)

### Kalzinierung von SnO₂

5 g handelsüblichen SnO₂ (Cfm Oskar Tropitzsch e. K. (CFM), Typ Batch 631, 500 mesh) wurden bei 1000 °C, 2 Stunden lang unter Luft kalziniert. Das kalzinierte SnO₂ wurde in einem Rundkolben in einer Lösung handelsüblichen 0,2577 g Rutheniumchlorid-n-Hydrats in 1,5 g Wasser suspendiert und 60 min bei Raumtemperatur gerührt. Die überschüssige Lösung wurde bei 60°C über Nacht eingedampft. Der erhaltene Feststoff wurde anschließend 16 h bei 250°C im Luftstrom kalziniert, wobei ein Rutheniumchloridkatalysator geträgert auf kalziniertem SnO₂ erhalten wurde. Die geträgerte Menge an Ruthenium entspricht einem Anteil von 2,01 Gew.-%.

### Beispiel 2 (erfindungsgemäß)

Es wurde 5 g eines Katalysators entsprechend des Beispiels 1 hergestellt, wobei der SnO₂-Träger vor Aufbringen des Rutheniumchlorids jedoch 4 h bei 500 °C unter Luft kalziniert wurde.

### Beispiel 3 (Vergleichsbeispiel)

Es wurde 5 g eines Katalysators entsprechend des Beispiels 1 hergestellt, wobei der SnO₂-Träger vor Aufbringen des Rutheniumchlorids jedoch nicht kalziniert wurde.

### Katalysator-Test Beispiel 4 (erfindungsgemäß)

### Einsatz des Katalysators aus Beispiel 1 in der HCl-Oxidation

0,2 g des pulverförmigen Katalysators gemäß Beispiel 1 wurden in einer Festbettschüttung in einem Quarzreaktionsrohr (Innendurchmesser 10 mm) bei 300°C mit einem Gasgemisch aus 80 ml/min (Standardbedingungen STP) Chlorwasserstoff und 80 ml/min (STP) Sauerstoff durchströmt. Das Quarzreaktionsrohr wurde durch eine elektrisch beheizte Sandwirbelschicht beheizt. Nach 30 min wurde der Produktgasstrom für 15 min in 16 Gew.-%-ige Kaliumiodidlösung geleitet. Das entstandene Iod wurde anschließend mit 0,1 N Thiosulfat-Maßlösung zurücktitriert, um die eingeleitete Chlormenge festzustellen. Es wurde ein Chlorbildungsrate von 1.96 kg_{Cl2}/kg_{KAT}·h gemessen.

### Katalysator-Test Beispiel 5 (erfindungsgemäß)

### Einsatz des Katalysators aus Beispiel 2 in der HCl-Oxidation

Es wurden 0,2 g des pulverförmigen Katalysators gemäß Beispiel 2 entsprechend dem Katalysatortestbeispiel 4 getestet. Dabei wurde ein Chlorbildungsrate von 1.66 kg_{Cl2}/kg_{KAT}·h gemessen.

### Katalysator-Test Beispiel 6 (Vergleichsbeispiel)

### Einsatz des Katalysators aus Beispiel 3 in der HCl-Oxidation

Es wurden 0,2 g des pulverförmigen Katalysators gemäß Beispiel 3 entsprechend dem Katalysatortestbeispiel 4 getestet. Dabei wurde ein Chlorbildungsrate von 1.44 kg_{Cl2}/kg_{KAT}·h gemessen.

### Beispiel 7 (erfindungsgemäß)

Es wurde 5 g eines Katalysators entsprechend dem Beispiel 1 hergestellt, wobei jedoch ein anderes kommerzielles SnO₂-Pulver (nano-SnO₂; Hersteller: Sigma-Aldrich) eingesetzt wurde. Nach der Kalzinierung für 2 h bei 1000 °C wurde eine BET-Oberfläche von 9,3 m²/g gemessen.

### Beispiel 8 (Vergleichsbeispiel)

Es wurde 5 g eines Katalysators entsprechend dem Beispiel 3 hergestellt, wobei jedoch ein anderes kommerzielles SnO₂-Pulver (nano-SnO₂; Hersteller: Sigma-Aldrich) mit einer BET von 20 m²/g wie erhalten eingesetzt wurde.

### Katalysator-Test Beispiel 9 (erfindungsgemäß)

### Einsatz des Katalysators aus Beispiel 7 in der HCl-Oxidation

Es wurden 0,2 g des pulverförmigen Katalysators gemäß Beispiel 7 entsprechend dem Katalysatortestbeispiel 4 getestet. Dabei wurde ein Chlorbildungsrate von 3.8 kg_{Cl2}/kg_{KAT}·h gemessen.

### Katalysator-Test Beispiel 10 (Vergleichsbeispiel)

### Einsatz des Katalysators aus Beispiel 8 in der HCl-Oxidation

Es wurden 0,2 g des pulverförmigen Katalysators gemäß Beispiel 8 entsprechend dem Katalysatortestbeispiel 4 getestet. Dabei wurde ein Chlorbildungsrate von 2.3 kg_{Cl2}/kg_{KAT}·h gemessen.

### Beispiel 11 (erfindungsgemäß)

### Trägerung von Rutheniumchlorid auf kalziniertem SnO₂-Formkörper

100 g kugelförmige SnO₂ Formkörper (kommerzielles SnO₂ Hersteller: Alfa-Aesar, Formgebung durch Firma Saint-Gobain) mit einem Anteil von 15 Gew.-% Al₂O₃ mit einem durchschnittlichen Durchmesser von 1,5 mm wurden für 4h bei 915°C kalziniert und anschließend mit einer Lösung aus 5.2535 g handelsüblichem Rutheniumchlorid-n-Hydrat in 16,7 g H₂O imprägniert. Nach einer Standzeit von 1 h wurde der Katalysator im Luftstrom bei ca. 60 °C innerhalb von 6 h getrocknet. Anschließend wurde der Katalysator 16 h bei 250 °C kalziniert. Es ergibt sich ein Katalysator mit umgerechnet 2 Gew.-%, an Ruthenium.

### Beispiel 12 (Vergleichbeispiel)

### Trägerung von Rutheniumchlorid auf unkalziniertem SnO₂-Formkörper

Es wurden 100 g Katalysator entsprechend Beispiel 11 hergestellt, wobei der Träger unkalziniert eingesetzt wurde.

### Katalysator-Test Beispiel 13 (erfindungsgemäß)

### Einsatz des Katalysators aus Beispiel 11 in der HCl-Oxidation

25 g des Katalysators gemäß Beispiel 11 wurden in einem mit Ölbad beheiztem Ni-Festbettreaktor (Durchmesser 22 mm, Länge 800 mm) zusammen mit 75 g Inertmaterial (Glaskugeln) eingebaut. Dabei wurde eine Festbettschüttung von ca. 150 mm erhalten. Die Festbettschüttung wurde mittels eines auf 350 °C aufgeheizten Wärmeträgers beheizt. Bei einem Druck von 4 bar wurde der Festbettreaktor mit einem Gasgemisch aus 40,5 L/h (STP) Chlorwasserstoff, 157,5 L/h (STP) Sauerstoff und 252 L/h (STP) Stickstoff durchströmt. Nach einer definierten Reaktionszeit (bspw. 30 min) wurde der Produktgasstrom für 5 min in 16%-ige Kaliumiodidlösung geleitet. Das entstandene Iod wurde anschließend mit 0,1 N Thiosulfat-Maßlösung zurücktitriert, um die eingeleitete Chlormenge festzustellen. Der daraus berechnete Umsatz betrug 92.8 %. Nach 240 min Laufzeit wurde eine auskondensierte Reaktionsprobe mittels ICP-OES (Inductively Coupled Plasma - Optical Emissions Spectrometry, Gerät: Varian Vista-PRO, Methode nach Herstellerangaben) auf den Gehalt an Sn analysiert. Der analysierte Wert betrug 88 ppm.

### Katalysator-Test Beispiel 14 (Vergleichsbeispiel)

### Einsatz des Katalysators aus Beispiel 12 in der HCl-Oxidation

25 g des Katalysators gemäß Beispiel 12 wurden analog des Katalysatortestbeispiels 13 getestet. Es wurde eine Umsatz von 89.4 % und ein Gehalt an Sn von 359 ppm gemessen.

### Beispiel 15 (erfindungsgemäß)

### Trägerung von Rutheniumchlorid auf kalziniertem SnO₂ Formkörper

50 g kugelförmige SnO₂ Formkörper (Hersteller Saint-Gobain, Ursprung: kommerzielles nano-SnO₂ von Sigma-Aldrich) mit einem Anteil von 15 Gew.-% Al₂O₃ als Binder mit einem durchschnittlichen Durchmesser von 1,5 mm wurden nach der Formgebung für 2 h bei 550 °C kalziniert. Dadurch wurde ein Träger mit einer BET-Oberfläche von 53 m²/g erhalten. Der Träger wurde anschließend mit einer Lösung aus 2.575 g handelsüblichem Rutheniumchlorid-n-Hydrat in 7.08 g H₂O imprägniert. Nach einer Standzeit von 1 h wurde der Katalysator im Luftstrom bei ca. 60 °C innerhalb von 6 h getrocknet. Anschließend wurde der Katalysator 16 h bei 250 °C kalziniert. Es ergibt sich ein Katalysator mit umgerechnet 2 Gew.-%, an Ruthenium.

### Beispiel 16 (erfindungsgemäß)

### Trägerung von Rutheniumchlorid auf kalziniertem SnO₂ Formkörper

Es wurden 50 g Katalysator entsprechend Beispiel 15 hergestellt, wobei der Träger für 2 h bei 1000°C kalziniert eingesetzt wurde. Dabei wurde ein Träger mit einer BET-Oberfläche von 25 m²/g erhalten.

### Katalysator-Test Beispiel 17 (erfindungsgemäß)

### Einsatz des Katalysators aus Beispiel 15 in der HCl-Oxidation

Es wurden 0,2 g des Katalysators gemäß Beispiel 15 zu Pulver zermahlen und entsprechend dem Katalysatortestbeispiel 4 getestet. Dabei wurde ein Chlorbildungsrate von 2.15 kg_{Cl2}/kg_{KAT}·h gemessen.

### Katalysator-Test Beispiel 18 (erfindungsgemäß)

### Einsatz des Katalysators aus Beispiel 16 in der HCl-Oxidation

Es wurden 0,2 g des Katalysators gemäß Beispiel 16 zu Pulver zermahlen und entsprechend dem Katalysatortestbeispiel 4 getestet. Dabei wurde ein Chlorbildungsrate von 2.4 kg_{Cl2}/kg_{KAT}·h gemessen.

### Katalysator-Test Beispiel 19 (erfindungsgemäß)

### Einsatz des Katalysators aus Beispiel 16 in der HCl-Oxidation

25 g des Katalysators gemäß Beispiel 16 wurden analog des Katalysatortestbeispiels 13 getestet, mit dem Unterschied, dass die Volumenströme bei 40.5 NL/h HCl, 315.0 NL/h 02 und 94.5 NL/h N2 lagen. Die Analyse auf Zinn im Kondensat (Probe nach 300 min Laufzeit) wurde mittels ICP-OES (Inductively Coupled Plasma - Optical Emissions Spectrometry, Gerät: Varian Vista-PRO, Methode nach Herstellerangaben) durchgeführt. Die Kondensatprobe enthält 91 ppm Sn.

Die wesentlichen Kennzahlen und Ergebnisse aus den aufgeführten Beispielen sind in der untenstehenden Tabelle zusammengefasst.

| Präp. Bsp. | Quelle | Form | Kalz. Dauer | BET | Test Bsp. | RZA | Sn-Austrag |
|---|---|---|---|---|---|---|---|
| # | | | °C | m²/g | # | kg/kg*h | ppm |
| 1 | CFM | Pulver | 1000 | | 4 | 1,96 | |
| 2 | CFM | Pulver | 500 | | 5 | 1,66 | |
| 3 (Vgl.) | CFM | Pulver | n. k. | | 6 (Vgl.) | 1,44 | |
| 7 | Aldrich | Pulver | 1000 | 9,3 | 9 | 3,80 | |
| 8 (Vgl.) | Aldrich | Pulver | n. k. | 20 | 10 (Vgl.) | 2,30 | |
| 11 | Alfa | Formkörper | 915 | | 13 | | 88 |
| 12 (Vgl.) | Alfa | Formkörper | n. k. | | 14 | | 359 |
| 15 | Aldrich | Formkörper gemahlen | 550 | 53 | 17 | 2,15 | |
| 16 | Aldrich | Formkörper gemahlen | 1000 | 25 | 18 | 2,40 | |
| 16 | Aldrich | Formkörper | 1000 | 25 | 19 | | 91 |

| | | | | | | | |
|---|---|---|---|---|---|---|---|
| n. k. = nicht kalziniert, RZA = Raumzeitausbeute (Chlorbildungsrate) | | | | | | | |

Schlussfolgerungen: Aus den Katalysatortestbeispielen 4-6 geht hervor, dass eine Kalzinierung des eingesetzten Zinndioxids in Pulverform bei 500°C zu einer Steigerung und eine Kalzinierung bei 1000°C zu einer erheblichen Steigerung der Aktivität des damit präparierten Katalysators in der HCl-Oxidation führt. Aus den Katalysatortestbeispielen 9 und 10 geht hervor, dass eine erfindungsgemäße Kalzinierung des eingesetzten Zinndioxids in Pulverform zu einer erheblichen Steigerung der Aktivität des damit präparierten Katalysators in der HCl-Oxidation führt, obwohl im Zuge dieser Kalzinierung die BET-Oberfläche zurückgeht. Aus den Katalysatortestbeispielen 13 und 14 geht hervor, dass eine erfindungsgemäße Kalzinierung der eingesetzten Zinndioxid-Formkörper zu einer erheblichen Steigerung der chemischen Stabilität des Trägers (Reduzierung des Zinnaustrags) in der HCl-Oxidation führt. Aus den Katalysatortestbeispielen 17 - 18 geht hervor, dass bei den gewählten Kalzinierbedingungen die Aktivität gesteigert werden kann, obwohl die BET-Oberfläche abnimmt. Zusätzlich, wie aus Katalysatortestbeispiel 19 hervorgeht, zeigt der Katalysator gemäß Beispiel 16 einen sehr niedrigen Zinnaustrag.

Ein hoher Zinnaustrag kann Probleme mit der mechanischen Stabilität des Katalysators bei den technisch favorisierten Laufzeiten von >= 2 Jahren mit sich bringen. Generell gilt: Je geringer der Zinnaustrag, desto niedriger der Abtrennungsaufwand.

Gängige Lehrmeinung ist, dass eine hohe Dispersion einer Edelmetallkomponente wünschenswert ist. Dies wird meistens über Träger mit hohen BET-Oberflächen und manchmal komplizierten Aufbringungsmethoden eingestellt. Insofern ist es besonders überraschend, dass trotz der Reduktion der BET-Oberfläche des Trägers durch die erfindungsgemäße Kalzinierung die Aktivität der damit präparierten Katalysatoren in der HCl-Oxidation ansteigt.

## Patentansprüche

1. Katalysatorzusammensetzung, die mindestens Zinndioxid als Trägermaterial und mindestens eine Ruthenium enthaltende Verbindung als katalytisch aktives Material umfasst, **dadurch gekennzeichnet, dass** das Trägermaterial vor der Aufbringung des katalytisch aktiven Materials einer Kalzinierung in Gegenwart oxidierender Gase, insbesondere in Gegenwart von Luft bei einer Temperatur von mindestens 450°C unterzogen ist und dass das Trägermaterial ein Bindemittel aufweist, wobei der Anteil an Bindemittel bezogen auf den fertigen Katalysator 1 bis 30 Gew.-% beträgt und wobei das Zinndioxid über 90% in der Kassiterit-Struktur vorliegt.

2. Zusammensetzung nach Anspruch 1, **dadurch gekennzeichnet, dass** die Rutheniumverbindung eine Halogen und/oder Sauerstoff enthaltende Rutheniumverbindung ist.

3. Zusammensetzung nach Anspruch 2, **dadurch gekennzeichnet, dass** das Halogen der Rutheniumverbindung aus der Reihe: Chlor, Brom und Iod ausgewählt ist und insbesondere Chlor ist.

4. Zusammensetzung nach einem der Ansprüche 1 bis 3, **dadurch gekennzeichnet, dass** die katalytisch aktive Rutheniumverbindung ausgewählt ist aus der Reihe: Rutheniumchlorid, Rutheniumoxychlorid und einer Mischung von Rutheniumchlorid und Rutheniumoxid und insbesondere eine Rutheniumoxychlorid-Verbindung umfasst.

5. Zusammensetzung nach Anspruch 4, **dadurch gekennzeichnet, dass** die katalytisch aktive Rutheniumverbindung eine Mischverbindung entsprechend der allgemeinen Formel RuClₓO_{y} ist, worin x eine Zahl von 0,8 bis 1,5 und y eine Zahl von 0,7 bis 1,6 bedeutet.

6. Zusammensetzung nach einem der Ansprüche 1 bis 5, **dadurch gekennzeichnet, dass** die Temperatur bei der Kalzinierung des Trägermaterials vor der Aufbringung des katalytisch aktiven Materials mindestens 500°C, bevorzugt mindestens 700°C, besonders bevorzugt 700°C bis 1100°C beträgt.

7. Zusammensetzung nach einem der Ansprüche 1 bis 6, **dadurch gekennzeichnet, dass** die Dauer der Kalzinierung des Trägermaterials vor der Aufbringung des katalytisch aktiven Materials über 0,5 bis 10 Stunden, bevorzugt 1 bis 6 Stunden durchgeführt ist.

8. Zusammensetzung nach einem der Ansprüche 1 bis 7, **dadurch gekennzeichnet, dass** die oxidierenden Gase bei der Kalzinierung des Trägermaterials vor der Aufbringung des katalytisch aktiven Materials einen Sauerstoffgehalt im Bereich von 10 Vol.-% bis 50 Vol.-%, bevorzugt 15 bis 25 Vol.-% aufweisen.

9. Zusammensetzung nach einem der Ansprüche 1 bis 8, **dadurch gekennzeichnet, dass** der Katalysator durch ein Verfahren erhältlich ist, bei dem das Entfernen des Lösungsmittels eine Trocknung bei wenigstens 80°C, bevorzugt wenigstens 100°C umfasst.

10. Zusammensetzung nach einem der Ansprüche 1 bis 9, **dadurch gekennzeichnet, dass** die Katalysatorzusammensetzung dadurch erhältlich ist, dass das mit einer Halogen enthaltenden Rutheniumverbindung beladene Trägermaterial bei einer Temperatur von mindestens 200°C, bevorzugt mindestens 240°C, besonders bevorzugt 250°C bis 650°C, insbesondere in einer Sauerstoff enthaltenden Atmosphäre, besonders bevorzugt unter Luft kalziniert wird.

11. Zusammensetzung nach einem der Ansprüche 1 bis 10, **dadurch gekennzeichnet, dass** der Anteil des Rutheniums aus der Halogen enthaltenden Rutheniumverbindung im Verhältnis zur gesamten Katalysatorzusammensetzung, insbesondere nach dem Kalzinieren, 0,5 bis 5 Gew.-%, bevorzugt 1,0 bis 4 Gew.-%, besonders bevorzugt 1,5 bis 3 Gew.-% beträgt.

12. Zusammensetzung nach einem der Ansprüche 1 bis 11 **dadurch gekennzeichnet, dass** das Zinndioxid vollständig in der Kassiterit-Struktur vorliegt.

13. Verfahren zur Herstellung von Chlor durch katalytische Gasphasenoxidation von Chlorwasserstoff mit Sauerstoff an einem Feststoffkatalysator, bei dem der Katalysator wenigstens Zinndioxid als Trägermaterial und mindestens eine Ruthenium enthaltende Verbindung als katalytisch aktives Material umfasst, **dadurch gekennzeichnet, dass** als Katalysator eine Zusammensetzung nach einem der Ansprüche 1 bis 12 verwendet wird.

14. Verfahren nach Anspruch 13, **dadurch gekennzeichnet, dass** die Gasphasenoxidation des Chlorwasserstoffs das Überleiten eines Chlorwasserstoff und Sauerstoff enthaltenden Gases bei einer Temperatur von 180 bis 500°C, bevorzugt 200 bis 450°C, besonders bevorzugt 250 bis 420°C umfasst und das entstehende Chlor vom Reaktionswasser und gegebenenfalls nicht umgesetztem Sauerstoff und Chlorwasserstoff getrennt wird.

15. Verfahren nach einem der Ansprüche 13 bis 14, **dadurch gekennzeichnet, dass** die Gasphasenoxidation bei einem Druck von 1 bis 25 bar, bevorzugt 1,2 bis 20 bar, besonders bevorzugt 1,5 bis 17 bar und insbesondere bevorzugt 2,0 bis 15 bar durchgeführt wird.

16. Verfahren nach einem der Ansprüche 13 bis 15, **dadurch gekennzeichnet, dass** die Gasphasenoxidation adiabatisch oder isotherm, insbesondere adiabatisch durchgeführt wird.

## Claims

1. Catalyst composition comprising at least tin dioxide as a support material and at least one ruthenium-containing compound as a catalytically active material, **characterized in that** the support material has been subjected, prior to the application of the catalytically active material, to a calcination in the presence of oxidizing gases, especially in the presence of air, at a temperature of at least 450°C and **in that** the support material includes a binder, wherein the proportion of binder based on the finished catalyst is 1 to 30% by weight and wherein the tin dioxide is more than 90% in the cassiterite structure.

2. Composition according to Claim 1, **characterized in that** the ruthenium compound is a halogen- and/or oxygen-containing ruthenium compound.

3. Composition according to Claim 2, **characterized in that** the halogen in the ruthenium compound is selected from the group of: chlorine, bromine and iodine and is especially chlorine.

4. Composition according to one or more of Claims 1 to 3, **characterized in that** the catalytically active ruthenium compound is selected from the group of: ruthenium chloride, ruthenium oxychloride and a mixture of ruthenium chloride and ruthenium oxide and especially a ruthenium oxychloride compound.

5. Composition according to Claim 4, **characterized in that** the catalytically active ruthenium compound is a mixed compound corresponding to the general formula RuClₓO_{y} in which x is a number from 0.8 to 1.5 and y is a number from 0.7 to 1.6.

6. Composition according to one or more of Claims 1 to 5, **characterized in that** the temperature in the course of calcination of the support material prior to application of the catalytically active material is at least 500°C, preferably at least 700°C, more preferably 700°C to 1100°C.

7. Composition according to one or more of Claims 1 to 6, **characterized in that** the duration of calcination of the support material prior to application of the catalytically active material has been conducted over 0.5 to 10 hours, preferably 1 to 6 hours.

8. Composition according to one or more of Claims 1 to 7, **characterized in that** the oxidizing gases in the calcination of the support material prior to application of the catalytically active material have an oxygen content in the range from 10% by volume to 50% by volume, preferably 15 to 25% by volume.

9. Composition according to one or more of Claims 1 to 8, **characterized in that** the catalyst is obtainable by a process in which the removal of the solvent comprises drying at at least 80°C, preferably at least 100°C.

10. Composition according to one or more of Claims 1 to 9, **characterized in that** the catalyst composition is obtainable by calcining the support material laden with a halogen-containing ruthenium compound at a temperature of at least 200°C, preferably at least 240°C, more preferably 250°C to 650°C, especially in an oxygen-containing atmosphere, more preferably under air.

11. Composition according to one or more of Claims 1 to 10, **characterized in that** the proportion of ruthenium from the halogen-containing ruthenium compound in relation to the overall catalyst composition, especially after calcination, is 0.5 to 5% by weight, preferably 1.0 to 4% by weight, more preferably 1.5 to 3% by weight.

12. Composition according to one or more of Claims 1 to 11 **characterized in that** the tin dioxide is completely in the cassiterite structure.

13. Process for preparing chlorine by catalytic gas phase oxidation of hydrogen chloride with oxygen over a solid catalyst, in which the catalyst comprises at least tin dioxide as a support material and at least one ruthenium-containing compound as a catalytically active material, **characterized in that** the catalyst used is a composition according to one or more of Claims 1 to 12.

14. Process according to Claim 13, **characterized in that** the gas phase oxidation of the hydrogen chloride comprises the passage of a gas comprising hydrogen chloride and oxygen at a temperature of 180 to 500°C, preferably 200 to 450°C, more preferably 250 to 420°C, and the chlorine formed is separated from the water of reaction and any unconverted oxygen and hydrogen chloride.

15. Process according to either of Claims 13 and 14, **characterized in that** the gas phase oxidation is conducted at a pressure of 1 to 25 bar, preferably 1.2 to 20 bar, more preferably 1.5 to 17 bar and especially preferably 2.0 to 15 bar.

16. Process according to any of Claims 13 to 15, **characterized in that** the gas phase oxidation is conducted adiabatically or isothermally, especially adiabatically.

## Revendications

1. Composition catalytique, qui comprend au moins du dioxyde d'étain en tant que matériau support et au moins un composé contenant du ruthénium en tant que matériau à activité catalytique, **caractérisée en ce que** le matériau support est soumis avant l'application du matériau à activité catalytique à une calcination en présence de gaz oxydants, notamment en présence d'air, à une température d'au moins 450 °C, et **en ce que** le matériau support comprend un liant, la proportion de liant par rapport au catalyseur fini étant de 1 à 30 % en poids, et le dioxyde d'étain se présentant à hauteur de plus de 90 % selon la structure cassitérite.

2. Composition selon la revendication 1, **caractérisée en ce que** le composé de ruthénium est un composé de ruthénium contenant un halogène et/ou de l'oxygène.

3. Composition selon la revendication 2, **caractérisée en ce que** l'halogène du composé de ruthénium est choisi dans la série constituée par le chlore, le brome et l'iode, et est notamment le chlore.

4. Composition selon l'une quelconque des revendications 1 à 3, **caractérisée en ce que** le composé de ruthénium à activité catalytique est choisi dans la série constituée par le chlorure de ruthénium, l'oxychlorure de ruthénium et un mélange de chlorure de ruthénium et d'oxyde de ruthénium, et comprend notamment un composé d'oxychlorure de ruthénium.

5. Composition selon la revendication 4, **caractérisée en ce que** le composé de ruthénium à activité catalytique est un composé mixte correspondant à la formule générale RuClₓO_{y}, dans laquelle x signifie un nombre de 0,8 à 1,5 et y signifie un nombre de 0,7 à 1,6.

6. Composition selon l'une quelconque des revendications 1 à 5, **caractérisée en ce que** la température lors de la calcination du matériau support avant l'application du matériau à activité catalytique est d'au moins 500 °C, de préférence d'au moins 700 °C, de manière particulièrement préférée de 700 °C à 1 100 °C.

7. Composition selon l'une quelconque des revendications 1 à 6, **caractérisée en ce que** la durée de la calcination du matériau support avant l'application du matériau à activité catalytique est de 0,5 à 10 heures, de préférence de 1 à 6 heures.

8. Composition selon l'une quelconque des revendications 1 à 7, **caractérisée en ce que** les gaz oxydants lors de la calcination du matériau support avant l'application du matériau à activité catalytique présentent une teneur en oxygène dans la plage allant de 10 % en volume à 50 % en volume, de préférence de 15 à 25 % en volume.

9. Composition selon l'une quelconque des revendications 1 à 8, **caractérisée en ce que** le catalyseur peut être obtenu par un procédé selon lequel l'élimination du solvant comprend un séchage à au moins 80 °C, de préférence à au moins 100 °C.

10. Composition selon l'une quelconque des revendications 1 à 9, **caractérisée en ce que** la composition catalytique peut être obtenue par calcination du matériau support chargé avec un composé de ruthénium contenant un halogène à une température d'au moins 200 °C, de préférence d'au moins 240 °C, de manière particulièrement préférée de 250 °C à 650 °C, notamment dans une atmosphère contenant de l'oxygène, de manière particulièrement préférée dans l'air.

11. Composition selon l'une quelconque des revendications 1 à 10, **caractérisée en ce que** la proportion de ruthénium dans le composé de ruthénium contenant un halogène par rapport à la composition catalytique totale, notamment après la calcination, est de 0,5 à 5 % en poids, de préférence de 1,0 à 4 % en poids, de manière particulièrement préférée de 1,5 à 3 % en poids.

12. Composition selon l'une quelconque des revendications 1 à 11, **caractérisée en ce que** le dioxyde d'étain se présente entièrement selon la structure cassitérite.

13. Procédé de fabrication de chlore par oxydation catalytique en phase gazeuse de chlorure d'hydrogène avec de l'oxygène sue un catalyseur solide, selon lequel le catalyseur comprend au moins du dioxyde d'étain en tant que matériau support et au moins un composé contenant du ruthénium en tant que matériau à activité catalytique, **caractérisé en ce qu'**une composition selon l'une quelconque des revendications 1 à 12 est utilisée en tant que catalyseur.

14. Procédé selon la revendication 13, **caractérisé en ce que** l'oxydation en phase gazeuse du chlorure d'hydrogène comprend le passage d'un gaz contenant du chlorure d'hydrogène et de l'oxygène à une température de 180 à 500 °C, de préférence de 200 à 450 °C, de manière particulièrement préférée de 250 à 420 °C, et le chlore formé est séparé de l'eau de réaction et éventuellement de l'oxygène et du chlorure d'hydrogène non réagis.

15. Procédé selon l'une quelconque des revendications 13 ou 14, **caractérisé en ce que** l'oxydation en phase gazeuse est réalisée à une pression de 1 à 25 bar, de préférence de 1,2 à 20 bar, de manière particulièrement préférée de 1,5 à 17 bar et de manière notamment préférée de 2,0 à 15 bar.

16. Procédé selon l'une quelconque des revendications 13 à 15, **caractérisé en ce que** l'oxydation en phase gazeuse est réalisée de manière adiabatique ou isotherme, notamment de manière adiabatique.
